Europäisches Patentamt

European Patent Office

Office européen des brevets

(19)

(11) Publication number: **0 012 538**
A2

# EUROPEAN PATENT APPLICATION

(12)

(21) Application number: 79302693.1

(22) Date of filing: 26.11.79

(51) Int. Cl.³: **G 09 B 7/02,** G 06 F 15/40

(30) Priority: 29.11.78 JP 164508/78
29.11.78 JP 164509/78
02.12.78 JP 166147/78

(43) Date of publication of application: 25.06.80
Bulletin 80/13

(84) Designated Contracting States: DE GB

(71) Applicant: CASIO COMPUTER COMPANY LIMITED,
6-1, 2-chome, Nishi-Shinjuku, Shinjuku-ku Tokyo (JP)

(72) Inventor: Iwamaru, Toshihusa, 1446, Kami Arai,
Tokorozawa-shi Saitama-ken (JP)

(74) Representative: Crawford, Andrew Birkby et al, A.A.
THORNTON & CO. Northumberland House 303-306 High
Holborn, London WC1V 7LE (GB)

(54) Electronic learning aid.

(57) When a correct answer is keyed in an electronic learning aid for sequentially displaying problems of operations such as arithmetic operations, the learning aid tells an operator to the effect by a sound related.

- 1 -

## Electronic learning aid

The invention relates to an electronic learning aid.

In recent days, a learning aid to aid a learner in learning operations such as arithmetic operations has been developed and put into practical use. The learning aid is provided with means to provide a first and a second operand in the arithmetic operation, for example, when a problem specified is entered from a key-in section, the learning aid display the problem by using the first and second operands. The device further solves the problem and stores the correct answer in the memory means. When an operator keys in the answer obtained by solving the problem displayed, the device compares the answer by the operator with that stored in the memory means. When both the answers are coincident with each other, the device displays at the display unit that the answer is correct. In this case, the display is performed in the version of symbols or by merely lighting a lamp. In this way, the conventional device tells the learner about correctness of the answer inputted only in the visualizing manner. Accordingly, the visual indication by the device is not impressive to the learner. For the answers by the solver to the given number of problems, the device

- 2 -

displays merely the number of the correct answers of them. For example, when the number of the correct answers exceeds a given number or all the answers are correct, the device visually indicates it. This also does not impress the solver. In the case of the learning aid with the time counting function, the time taken for the solving the answer may be counted in a manner that, at the start of the solving, the solver starts the time counting by operating the key-in section and stops it at the end of the solving work. The device of this type thus needs the operation in the key-in section and this operation is troublesome for the operator.

Accordingly, an object of the invention is to provide an electronic learning aid in which, when the answer entered by a solver is correct, a sound device is driven to sound the correctness of the answer.

Another object of the invention is to provide an electronic learning aid which drives a second device for each correct answer to tell a solver the correctness of the answer aurally.

Still another object of the invention is to provide an electronic learning aid which drives a sound device, when all or the given number of the answers are correct, to tell an solver the correctness of them aurally.

Yet another object of the invention is to provide an electronic learning aid which applies a drive signal to drive the sound device to a light emission element thereby to drive the light emission element in flashing manner in synchronism with the sounding, and hence tells the correctness of the answer aurally and visually as well.

A further object of the invention is to provide an electronic learning aid with a time counting function which can control the start and stop of the time counting operation without operating the key at the start and the stop of the solving work thereby to automatically count the solving work.

To achieve the embodiment, there is provided an electronic learning aid comprising: problem preparing means for sequentially producing problems such as arithmetic operations; means for displaying the problem produced by the problem preparing means; key-in means for keying in the answer to the problem displayed by the display means; judging means for judging whether the answer keyed in by the key-in means is correct or not; drive signal output means to produce a drive signal when the answer keyed in by the key-in means is correct; and sound means driven by the drive signal outputted from the drive signal producing means.

In the learning aid with such a construction, when the answer keyed in by a solver is correct, a sound device such as a buzzer make a sound to impressively tell the solver the correctness of the answer. The learning aid aurally stimulates the solver to heighten his will to study and also to improve the efficiency of study.

Further, when all or the pregiven number of answers are correct, the sound device sounds to this effect. This also is impressive to the learner.

Accordingly, the drive signal to drive the sound device is used to.drive the light emission element in synchronism with the sounding thereby to flash. The display by flashing is impressive for the learner.

The time counting starts simultaneously with the display of the first problem, and automatically stops at the item that all the problems are solved. By this function, the problem solving time may be measured without commanding start and stop of the time counting function by the key operation. This eliminates the troublous work of the key operation.

Other objects and features of the invention will be apparent from the following description taken in connection with the accompanying drawings, in which:

Fig. 1 shows a perspective view of an outer appearance of an electronic learning aid as an embodiment

- 4 -

of the invention;

Fig. 2 shows a block circuit diagram of the embodiment shown in Fig. 1;

Figs. 3(a) to 3(e) show a set of timing charts useful in explaining the operation of the embodiment shown in Fig. 1;

Figs. 4(a) to 4(f) illustrate key operations and related displays for illustrating the operation of the embodiment shown in Fig. 1; and

Fig. 5 shows a block circuit diagram for illustrating another embodiment of the invention.

An embodiment of an electronic learning aid according to the invention will be described with reference to the accompanying drawings.

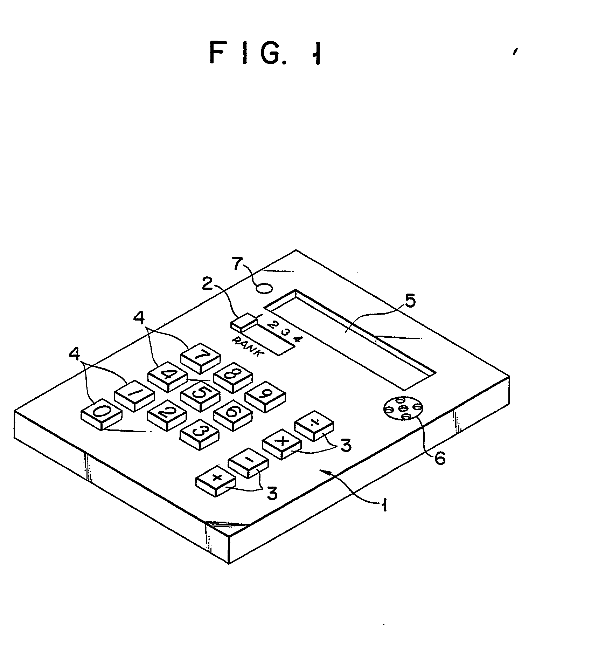

In Fig. 1 illustrating perspectively an external appearance of the learning aid as an embodiment according to the invention, a key-in section 1 includes problem rank selector 2 of a slider switch to selectively designate ranks (four ranks in this example) of the hardness of problems, function keys 3 to designate the kind of the problem such as addition, subtraction, multiplication, division, and ten keys 4 to input the data of answer.

The problem and the answer to it are displayed by a display section 5 located at the upper portion of the learning aid. Further, a hole 6 through which a buzzing sound passes externally when the answer data inputted is correct, and a lamp 7 which flashes in synchronism with the buzzing sound, are formed on the surface of the learning aid, as shown.

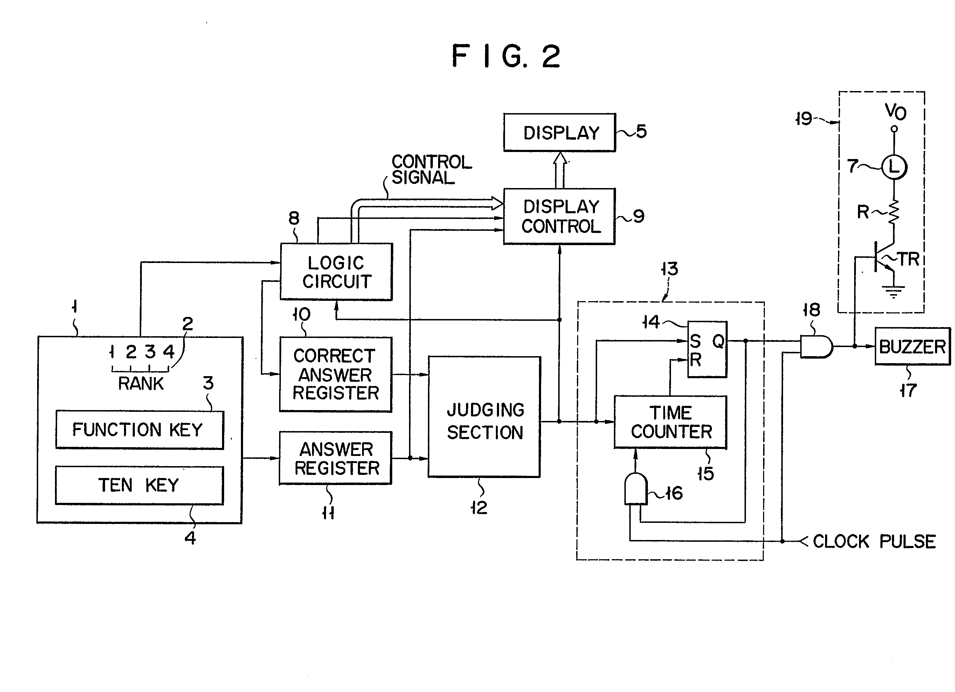

Turning now to Fig. 2, there is shown in block form a circuit diagram of the learning aid shown in Fig. 1. In Fig. 2, problem setting data is entered from the key-in section 1 into a problem preparation circuit 8 as a logic circuit, as described above. The logic circuit 8 prepares the problem in accordance with the hardness and the kind of a problem. The problem thus prepared is transferred to a display control section 9 and then is displayed by the display section 5. At the same time, the correct answer data to the problem is transferred to a correct answer register 10 where it is temporarily stored. The logic circuit 8 produces various control signals to control the display section and the like.

Further, from the key-in section 1, the answer data is entered into the learning aid by means of ten keys. Then, it is stored in an answer register 11. In synchronism with the answer data within the correct answer register 10, the answer data is inputted into a judging section 12 while at the same time it is transferred to the display section 5, through the display control section 9.

The judging section 12 judges whether the correct data from the correct answer register 10 is coincident with the answer data from the answer register 11 or not. The result of the output signal, which is logical "1" for the coincidence and logical "0" for the noncoincidence, is applied to the logic circuit 8, the display control section 9 and the buzzer drive section 13. The output signal from the judging section 12 controls the logic circuit 8 so as to prepare the next problem and produce it. If the answer is incorrect, the output signal from the judging section 12 is logical "0", so that the logic circuit 8 does not produce the next problem. For example, if the incorrect answer is produced continuously three times to the same problem, the logic circuit is so controlled as to prepare and produce the next problem. The buzzer drive section 13 is comprised of an R-S flip-flop 14, a time counter 15, and an AND gate 16. The comparison result output from the judging section 12 resets the time counter 15 while at the same time it is applied to the set input terminal S of the R-S flip-flop 14. The output signal produced from the set output terminal Q of the R-S flip-flop 14 is applied to an AND gate 16 with a clock pulse being currently applied. The AND gate 16 is fully conditioned by the output signal from the terminal Q. The time counter 15 is used to set the drive time of the buzzer 19 such as a piezo-electric buzzer. Every time the clock pulse is applied to the time counter 15 via the AND gate 16, the time counter 15 is counted up. When the contents of the clock counter 15 reaches a count corresponding to 5 seconds, the counter produces a carry signal which in turn is applied to the reset terminal R of the R-S flip-flop 14.

The output signal at the set output terminal Q of the R-S flip-flop 14 is applied to an AND gate 18 with the clock pulse being applied thereto currently. The AND gate 18 is fully conditioned by the signal from the terminal Q. The output signal of the AND gate 18 is applied to the buzzer 17, thereby to drive the buzzer to make a sound. The output signal from the AND gate 18 is also applied to the base of an NPN transistor TR within a lamp drive section 19. A ground level voltage is intermittently applied through the transistor TR and the resistor R to one end of the lamp 7 connected through a resistor R to the collector of the transistor TR. A voltage Vo is constantly applied to the other end of the lamp 7. By the intermittent application of the ground level voltage, the lamp 7 flashes.

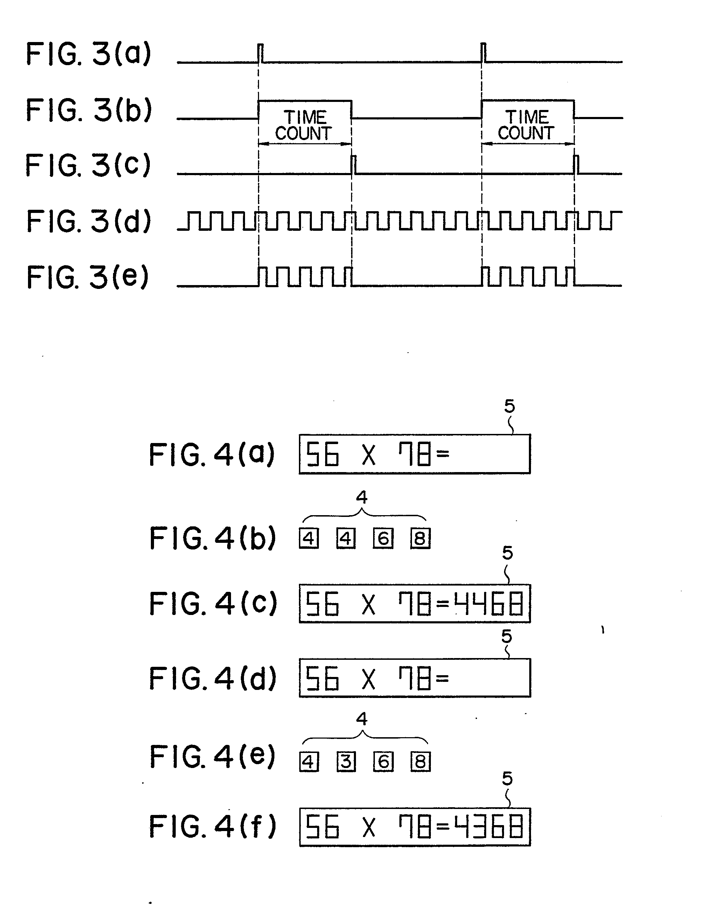

The operation of the embodiment of the invention will be described. In the key-in section 1, a rank of the hardness of a problem and the kind of the problem such as the multiplication are specified. The logic circuit 8 prepares the problem of the data which in turn is applied to the display section 5 thereby to visualize it. Seeing the problems displayed, a solver successively keys in the answers to the problems. The answer data keyed in is stored in the answer register 11. On the other hand, the correct answer to the problem displayed is produced from the logic circuit 8. In this way, the contents of the correct answer register 10 and the answer register 11 are read out and sent to the judging section 12. The judging circuit 12 judges every problem whether the answer to it is correct or not. If it is correct, the judging section 12 produces "1" as shown in Fig. 3(a). The comparison result signal is applied to the logic circuit 8 thereby to prepare the next problem. When "1" is produced from the judging circuit 12, the time counter 15 is reset while the R-S flip-flop 14 is set. In this way, the output signal at the set output terminal Q of the R-S flip-flop 14 becomes logical "1" as shown in Fig. 3(b), with the result that the clock pulse shown in Fig. 3(d) is produced from the AND gate 18 as shown in Fig. 3(e). Since the output signal from the set output terminal Q of the R-S flip-flop 14 is also applied to the AND gate 16, the AND gate 16 is open to permit the clock pulse to go to the time counter 15. The time counter 15 counted up for each clock pulse applied thereto, and when the contents of the counter reaches a given value, the carry signal is applied to the reset input terminal R of the R-S flip-flop 14, as shown in Fig. 3(c), thereby to reset the flip-flop 14. Accordingly, the output terminal Q of the R-S flip-flop 14 becomes "0" to disable the AND gate 18, with the result that the AND gate 18 ceases its outputting of the clock pulses.

Let us consider a case where a problem "56 x 78 =" is displayed, as shown in Fig. 4(a), by the display section 5. To this problem, if a solver gives an answer "4468" erroneously and keys in this incorrect answer by the ten key 4, the display section 5 displays it as shown in Fig. 4(c). At the same time, the judging section 12 compares the correct answer data "4368" stored in the correct answer register 10 with the answer data "4468" stored in the answer register 11. In this example, both are not coincident with each other, so that an output signal of logical "0" is applied from the judging circuit 12 to the buzzer drive unit 13 and the logic circuit 8. As a result, the answer data "4468" displayed in the display unit 5 is erased as shown in Fig. 4(d) to call upon the solver to reenter the answer data into the

- 8 -

device. In this case, since the output signal from the judging circuit 12 is "0", the R-S flip-flop 14 is not set. Accordingly, the AND gate 18 is disabled to block the outputting of the clock signal therefrom and not to drive the buzzer 17 and the lamp 7.

When the solver keys in the correct answer data "4368" into the learning aid by the ten key 4 in the key-in section 1, as shown in Fig. 4(e), the judging section 12 compares the contents of the correct answer register 10 with that of the answer register 11. In this case, the result of the comparison is coincidence between them, so that the judging section 12 produces logical "1" for application to the logic circuit 8, the display control section 9 and the buzzer drive section 13. In the case of logical "1" of the output signal from the judging circuit 12, the gate 18 is enabled and the clock pulse is applied to the buzzer 17 to make a buzzing sound and also to the lamp drive unit 19 to flash the lamp 7. Specifically, the transistor TR in the lamp drive portion 19 repeats ON and OFF states in response to the clock pulse, so that the lamp 7 flashes at given intervals in synchronism with the buzzing sound.

After the completion of the sounding and the flashing operations, the logic circuit 8 prepares the problem to next be solved and supplies it through the display control section 9 to the display section 5. The display section 5 displays the new problem to call on the operator to solve it.

In this way, every time the answer given by the operator is correct, the buzzer 17 is buzzed. At the same time, the lamp 7 is flashed in synchronism with the buzzing. Therefore, the operator can perceive by his ears and eyes.

The sound with a given melody may also be used in place of the mere buzzing sound used in the above-mentioned description. This may be realized by using clock pulses with a given frequency being applied to the buzzer. Further, by properly changing the clock pulse to be applied to the buzzer 17 and the lamp drive section 19, the sounding and the flashing may be carried out in different manner. Additionally, the circuit construction and the circuit component may be changed or modified within the scope of the invention.

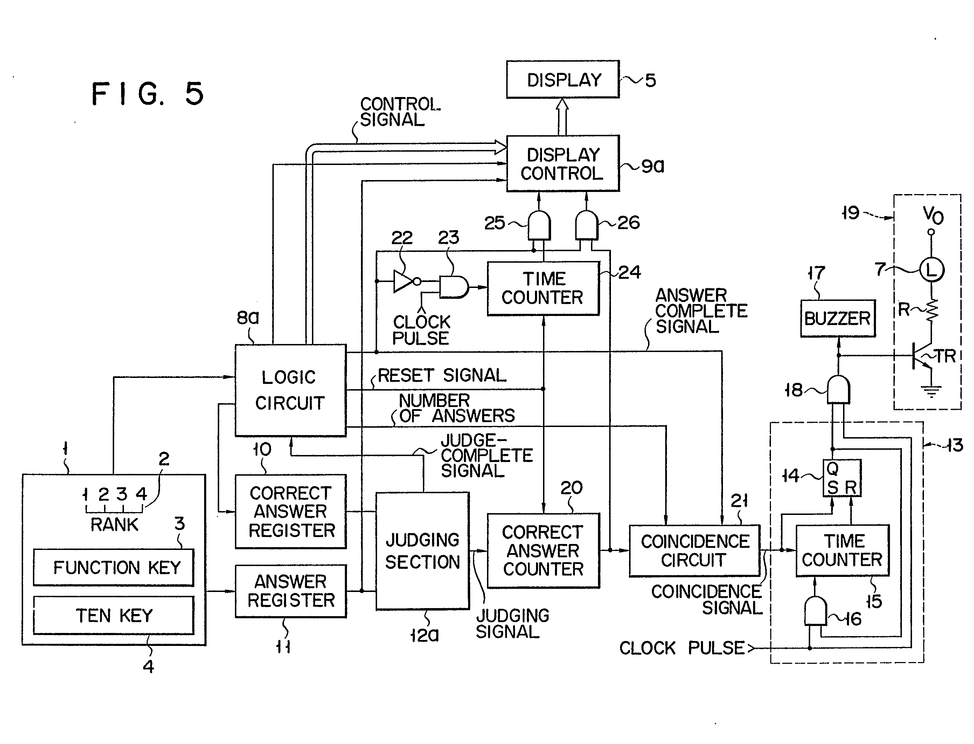

Another embodiment of the invention will be described referring to Fig. 5, and Figs. 6(a) to 6(f). Like symbols designate like or equivalent portions in drawings related to the above-mentioned embodiment, for simplicity. In Fig. 5, a function key 3 in the key-in section 1 is operated to designate the kind of a problem. The data to designate the kind of the problem keyed in is transferred to a logic circuit 8a. Upon receipt of the problem kind designating data, the logic circuit 8a prepares a problem of the kind specified and transfers it to a display control section 9a thereby to be displayed in the display section 5. Immediately after the new problem is prepared, the logic circuit solves the problem temporarily stores it in the correct answer register 10. In the key-in section 1, the answer data is keyed in through the operation of the ten key 4. The answer data is temporarily stored in the answer register 11. The judging section 12a compares the correct answer data stored in the correct answer register 10 with the answer data stored in the answer register 11. When the answer is correct, it produces a judgement signal of logical "1" but, when it is incorrect, it produces the signal of logical "0". The judging signal is applied from the judging section 12a to the correct answer counter 20. When it is logical "1", the counter 20 counts the number of the correct answers. When it is logical "0", the counter 20 counts nothing. As the judgement is completed in the judging section 12a, a judgement complete signal is applied to the logic circuit 8a. A coincidence circuit 21 compares the number of the problems produced from the logic circuit 8a with the number of the correct answers counted by the correct answer counter 20. A coincident signal outputted from the coincident circuit 21 is applied to the buzzer drive section 12 where it is applied to the set input terminal S of the flip-flop 14 and at the same time it resets the time counter 15. The output signal at the set output terminal Q of the R-S flip-flop 14 is applied to the AND gate 16 having the clock signal applied thereto. The AND gate is controlled in its gating operation. The time counter 15 sets the drive time of the buzzer 17. For each clock pulse applied thereto through the AND gate 16, the time counter 15 counts up. When the contens of the counter 15 a value corresponding to 5 seconds, the counter 15 produces a carry signal which is turn is applied to the reset input terminal R of the R-S flip-flop 14.

The output signal from the set output terminal Q of the R-S flip-flop 14 is applied to the AND gate 18 with the clock pulse applied thereto. The AND gate 18 is controlled in its gating operation. The output signal from the AND gate 18 is applied to the buzzer 17 and the lamp drive section 19, thereby to buzz the buzzer 17 and flasher the lamp 7. The problem complete signal derived from the logic circuit 8a is applied to an AND gate 23 through an inverter 22. The AND gate 23, having received the clock pulse, transfers its output signal as a count-up signal to the time counter 24. The time counter 24 and the correct answer counter 20 are reset by a reset signal outputted from the logic circuit 8a at the time that the first problem is prepared. The contents of the time counter 24 is applied to the display control section 9a, through the AND gate 25. The contents of the correct answer counter 20 is inputted to the display control section 9a, via the AND gate 26. The gatings of the AND gates 25 and 26 are controlled by the problem complete signal produced from the logic circuit 8a. In accordance with the control signal applied from the logic circuit 8a, the display control section 9a selectively applies the problem data from the circuit 8a, the answer data from the register 11, the number of the correct answers of the correct answer counter 20, or the time count data from the time counter 24, to the display section 5.

The operation of the second embodiment of the invention, as described above, will be described. A solver operates the function key 3 in the key-in section. Upon the operation, a problem prepared by the logic circuit 8a is displayed by the display section 5. Seeing the problem displayed, the solver presses the ten key 4 to enter the answer data prepared by him in the learning aid device. The answer data is stored in the answer 11. At this time, the correct answer register 10 has already stored the correct answer prepared by the logic circuit 8a. The judging section 12a judges if the contents of both the registers are coincident or not. If the answer data is correct, the judging circuit 12a produces a judging signal of logical "1" to cause the correct answer counter 20 to count up. After the judging operation is completed, judging section 12a produces a judging complete signal and the logic circuit 8a prepares the next problem. When the answer is incorrect, the correct answer counter is not counted up and the next problem is provided. The contents of the correct answer counter 20 is applied to one input terminal of the coincident circuit 21. At this time, the coincident circuit 21 has received at the other input terminal the output signal corresponding to all the problems applied from the logic circuit 8a. When the problems are all solved by the solver, the key-in section 1 produces the problem complete signal which in turn is compared with the signal at the input of the coincident circuit 21.

When all the answers are correct, a coincident signal is produced from the coincident circuit 21 which in turn sets the R-S flip-flop 14. As a result, the flip-flop 14 produces at the set output terminal Q an output signal. Accordingly, the AND gate 18 is enabled to permit the clock pulse to pass therethrough to the buzzer 17. The clock pulse is also applied to the lamp drive section 19. In this way, when all the answers are correct, the buzzer 17 buzzes and the lamp 7 flashes in synchronism with the buzzing. A coincident signal produced from the coincident circuit 21 resets the time counter 15. At this time, the R-S flip-flop is in set state. Therefore, the AND gate 16 is enabled to permit the clock pulse to pass therethrough to the time counter 15 thereby to sequentially count up the time counter 15. After 5 seconds are passed, the contents of the time counter 15 reaches a given value. At this time, it produces a carry signal which in turn is applied to the reset input terminal R of the R-S flip-flop 14, thereby to reset the R-S flip-flop 14. Accordingly, the AND gate 18 is disabled to stop the drive of the buzzer 17 and the lamp 7.

When the logic circuit 8a produces the first problem data, it produces a reset signal to reset the correct counters 20 and the time counter 24. After reset, the time counter 20 starts the time count operation in response to the clock pulse applied through the AND circuit 23. As all the problems previously set are outputted from the logic circuit 8a, the problem complete signal is produced from the logic circuit 8a to enable the AND circuits 25 and 26. Upon the outputting of the problem complete signal, the inverter 22 produces a signal of logical "0", so that the AND gate 23 is disabled and the count-up operation of the time counter 24 is inhibited. The contents of the correct counter 20 and the time counter 24 are applied through the AND circuit 26 to the display control section 9a. After all the problems are solved, the correct answer and a time taken for it is displayed by the display section 5.

In this way, the time counting starts simultaneously with the display of the first problem, and it automatically stops as the problems are all solved. Therefore, the solving time may automatically be measured without any special operation. When the solver correctly solves all the problems, the buzzer 17 makes a buzzing sound while at the same time the lamp 7 flashes. The solver can percieve by the ear and the eye impressively.

As described above, the embodiment is so designed that, when the number of all the problems is compared with that of the correct answers, and when those are coincident with each other, the sound is made. In an alternation, when the number of the correct answers reaches a given value, the buzzer produces a buzzing sound. Many other variations and modifications of the invention are allowable within the scope of the invention.

Claims:

1. An electronic learning aid comprising:
problem preparing means for sequentially producing problems such as arithmetic operations;
means for displaying the problem produced by said problem preparing means;
key-in means for keying in the answer to the problem displayed by said display means;
judging means for judging whether the answer keyed in by said key-in means is correct or not;
drive signal output means for producing a drive signal when the answer keyed in by said key-in means is correct; and
sound means driven by the drive signal outputted from said drive signal producing means.

2. An electronic learning aid comprising:
problem preparing means for sequentially producing problems such as arithmetic operations;
means for displaying the problem produced by said problem preparing means;
key-in means for keying the answer to the problem displayed by said display means;
judging means for judging whether the answer keyed in by said key-in means is correct or not;
counting means for counting the number of the correct answers judged by said judging means;
detecting means for detecting if the answer are all correct or the number of the correct answers is a given number or more by comparing the number of the problems with the number of the correct answers counted by said counting means when the answers of all the problems previously set are keyed in by said key-in means;
drive signal output means for producing a drive signal when said detecting means detects that all the answers are correct or the number of the correct answers is a given number or more; and

0012538

- 2 -

sound means driven by the drive signal outputted from said drive signal producing means.

3. An electronic learning aid comprising:

problem preparing means for sequentially producing problems such as arithmetic operations;

means for displaying the problem produced by said problem preparing means;

key-in means for keying the answer to the problem displayed by said display means;

judging means for judging whether the answer keyed in by said key-in means is correct or not;

drive signal output means for producing a drive signal when the answer keyed in by said key-in means is correct or not;

sound means driven by the drive signal outputted from said drive signal producing means; and

light emission display means which is driven by the drive signal outputted from said drive signal producing means to make a flash in synchronism with the sounding of said sound means.

4. An electronic learning aid comprising:

problem preparing means for sequentially producing problems such as rithmetic operations;

means for displaying the problem produced by said problem preparing means;

key-in means for keying the answer to the problem displayed by said display means;

judging means for judging whether the answer keyed in by said key-in means is correct or not;

counting means for counting the number of the correct answers judged by said judging means;

detecting means for detecting if the answer are all correct or the number of the correct answers is a given number or more by comparing the number of the problems with the number of the correct answers counted by said counting means when the answers of all the problems previously set are keyed in by said key-in means;

drive signal output means for producing a drive signal when said detecting means detects that all the answers are correct or the number of the correct answers is a given number or more;

sound means driven by the drive signal outputted from said drive signal producing means; and

light emission display means which is driven by the drive signal outputted from said drive signal producing means to make a flash in synchronism with the sounding of said sound means.

5. An electronic learning aid comprising:

a problem preparing means;

display means for displaying the problem prepared by said problem preparing means;

key-in means for keying in the answer to the problem displayed by said display means;

time counting means to initiate a time counting operation when said problem preparing means prepares the first problem in response to a command issued from said key-in means;

control means which stops the time counting operation of said time counting means when the answers to all the problems are entered from said key-in section and displays simultaneously the contents of the time counting means.

# F I G. 1

FIG. 2

FIG. 3(a)

FIG. 3(b)    TIME COUNT    TIME COUNT

FIG. 3(c)

FIG. 3(d)

FIG. 3(e)

FIG. 4(a)    |56 X 78= |    5

FIG. 4(b)    4    |4| |4| |6| |8|

FIG. 4(c)    |56 X 78=4468|    5

FIG. 4(d)    |56 X 78= |    5

FIG. 4(e)    4    |4| |3| |6| |8|

FIG. 4(f)    |56 X 78=4368|    5

# FIG. 5